# EUROPÄISCHE PATENTSCHRIFT

(11) **EP 0 972 156 B1**
(45) Veröffentlichungstag und Bekanntmachung des Hinweises auf die Patenterteilung: **17.04.2002**
(21) Anmeldenummer: 98904000.1
(22) Anmeldetag: 07.01.1998
(51) Int. Cl.: F16T 1/00

(54) **VORRICHTUNG UND VERFAHREN ZUM ABLEITEN VON KONDENSAT AUS DRUCKGASSYSTEMEN**
DEVICE AND METHOD FOR REMOVING CONDENSATE FROM GAS PRESSURE SYSTEMS
DISPOSITIF ET PROCEDE D'EXTRACTION DE CONDENSAT HORS DE SYSTEMES A PRESSION DE GAZ

(30) Priorität: 04.04.1997 DE 19714037
(43) Veröffentlichungstag der Anmeldung: 19.01.2000
(73) Patentinhaber: Koch, Berthold, 41468 Neuss (DE)
(72) Erfinder: KOCH, Berthold, D-41468 Neuss (DE); WÄRZELBERGER, Rainer, D-40699 Erkrath (DE)
(74) Vertreter: Bauer, Wulf, Dr.
(86) Internationale Anmeldenummer: DE9800020
(87) Internationale Veröffentlichungsnummer: WO9845641

(56) Entgegenhaltungen:
- FR-A- 1 413 218
- FR-A- 2 640 354
- US-A- 3 905 385
- US-A- 5 469 879

## Beschreibung

Die Erfindung bezieht sich auf eine Anordnung und ein Verfahren zum Ableiten von Kondensat aus Druckgassystemen, insbesondere Druckluftsystemen, die einen Sammelraum für Kondensat aufweisen, in dem sich bei Betrieb des Druckgassystems Kondensat ansammelt und der mindestens einen Auslaß hat.

Derartige Vorrichtungen sind vielfältig bekannt, beispielsweise aus der EP 391 250 B1. Danach wird aus dem Druckgassystem an einer Auslaßstelle, beispielsweise dem tiefsten Punkt einer Rohrleitung, Kondensat entnommen, das sich in einem Sammelraum des vorbekannten Kondensatableiters sammelt. In diesen Sammelraum ragt mindestens ein elektronischer Sensor, der von einem Rohrkörper getragen wird und der den Pegelstand des Kondensats erfasst. Vorzugsweise sind zwei derartige Sensoren in unterschiedlicher Höhe vorgeschen. Wenn der Sammelraum bis zur Höhe des oberen Sensors gefüllt ist, beginnt ein Ableitvorgang. Die mit den Sensoren verbundene Elektronik öffnet eine Ventilanordnung. Dadurch wird der Weg für Kondensat aus dem Sammelraum zu einem Kondensatablass frei.

Die Ventilanordnung hat beispielsweise ein Steuerventil in Form eines Magnetventils und ein hierdurch gesteuertes Hauptventil in Form eines Membranventils. Auf diese Weise werden die Betätigungskräfte und damit die Anforderungen an die Elektronik verringert.

Nachteilig bei den vorbekannten Kondensatableitern ist der eigene Sammelraum. Druckgassysteme haben üblicherweise eigene Sammelräume oder können mit derartigen Sammelräumen einfach zusätzlich ausgestattet werden. Derartige Sammelräume sind häufig groß, oft viel größer als die Sammelräume von Kondensatableitern.

Aus der FR-A-1 413 218 ist ein rohrförmiger Füllstandsmesser bekannt, der in einem Auslass eines Sammelraums dicht befestigt ist und sich in diesem Sammelraum befindet. Er hat einen Sensor der magnetisch betätigt ist.

Hier setzt nun die Erfindung ein. Sie hat es sich zur Aufgabe gemacht, Kondensatableiter der eingangs genannten Art dahingehend zu vereinfachen und somit auch kostengünstiger. auszubilden, dass sie keinen eigenen Sammelraum haben, sondern den Sammelraum eines Druckgassystems nutzen und an den Behälter dieses Sammelraums so angesetzt werden können, dass insgesamt die Funktion eines Kondensatableiters, wie er ansich aus dem Stand der Technik bekannt ist, erzielt wird.

Ausgehend von der Vorrichtung der eingangs genannten Art wird diese Aufgabe gelöst durch eine Anordnung nach Patentanspruch 1 und ein Verfahren nach Patentanspruch 12.

Eine derartige Anordnung, zusammen mit einem Behälter eines Druckgassystems, an den die Vorrichtung angesetzt ist, hat eine vergleichbare Funktion wie der Kondensatableiter nach dem eingangs genannten Stand der Technik, benötigt aber im Gegensatz zu diesem keinen eigenen Sammelraum. Da der Sammelraum eines Kondensatableiters nach dem Stand der Technik als Druckbehälter ausgelegt sein muß und damit an ihn gewisse Anforderungen gestellt werden, spart man erheblich bei der erfindungsgemäßen Vorrichtung, die keinen eigenen Sammelraum benötigt. Zudem kann der Sammelraum, mit dem die erfindungsgemäße Vorrichtung zusammenarbeitet, relativ groß und jeweils speziell auf die Bedürfnisse des konkreten Druckgassystems abgestellt werden. Ebenso kann die erfindungsgemäße Vorrichtung den jeweiligen Erfordernissen des konkreten Druckgassystems und insbesondere seines Sammelraums angepaßt werden. Die erfindungsgemäße Vorrichtung, die zusätzlich an einem den Sammelraum ausbildenden Behälter des Druckgassystems angeordnet wird, baut wesentlich kleiner als ein Kondensatableiter nach dem Stand der Technik, denn der Sammelraum des bekannten Kondensatableiters hat üblicherweise den größten Platzbedarf von allen Bauteilen des vorbekannten Kondensatableiters.

Der elektronische Sensor ist ein kapazitiver Sensor mit einer Innenelektrode und einer Außenelektrode. Zur Vermeidung einer Bildung eines geschlossenen Belags zwischen Innenelektrode und Außenelektrode ist eine mechanische Verbindung zwischen Innenelektrode und Außenelektrode nur oberhalb eines nach oben luftdicht abgeschlossenen, nach unten offenen Hohlraums vorgesehen.

Vorzugsweise sind die Elektroden so ausgeführt, dass die Außenelektrode die Innenelektrode über 360 Grad umgreift und sie oben und unten auch so abschließt, dass das Kondensatorfeld sich ausschließlich, jedenfalls so weit wie möglich, innerhalb der Außenelektrode befindet. Dadurch werden Störungen durch Verschmutzungen und Beläge weiter verringert.

Hierzu hat es sich als besonders vorteilhaft erwiesen, einen Mindestabstand d zwischen Innenelektrode und Außenelektrode einzuhalten, der größer als 2, vorzugsweise größer als 3 und insbesondere größer als 4 bzw. 5 mm ist.

Weiterhin hat es sich als vorteilhaft erwiesen, eine Elektrode des kapazitiven Sensors an eine Zuleitung anzuschließen und diese Zuleitung mindestens in der Höhe h oberhalb eines unteren Randes eines nach oben luftdicht abgeschlossenen, nach unten offenen Hohlraums verlaufen zu lassen. Auch hierdurch wird erreicht, dass sich kein den Sensor störender Belag ausbilden kann, der sich durchgängig von der Innenelektrode zur Außenelektrode hin erstreckt.

Die Zuleitung der Innenelektrode kann von einem metallisch leitenden Teil ummantelt sein, das mit der Außenelektrode in elektrischer Verbindung steht.

In einer bevorzugten Ausführung der Erfindung ist zumindest ein Teil der Elektronik am und vorzugsweise im Rohrkörper untergebracht, insbesondere ein Vorverstärker. Dadurch wird eine kapazitive Entkopplung erreicht, die Kapazität der Zuleitung gegenüber Masse spielt nun keine Rolle mehr, soweit die Zuleitung hinter dem Vorverstärker ist. Dadurch können Kapazitätsänderungen aufgrund von Kondensat, das sich zwischen den Elektroden befindet, mit größerer Empfindlichkeit nachgewiesen werden.

Schließlich bezieht sich die Erfindung noch auf ein Verfahren zum Betreiben der Vorrichtung nach den Vorrichtungsansprüchen. Verfahrensgemäß ist nur ein einziger Füllstandsmesser für ein unteres Niveau vorgesehen, weiterhin ist in der Elektronik eine Zeitschaltung ausgebildet. Nach Schließen der Ventilanordnung befindet sich der Flüssigkeitsspiegel des Kondensats unter dem unteren Niveau. Steigt der Flüssigkeitsspiegel des Kondensats auf das untere Niveau, wird die Zeitschaltung ausgelöst. Ist die vorgegebene Zeit abgelaufen, wird die Ventilanordnung durch die Elektronik geöffnet. Dies geschieht solange, bis das untere Niveau wieder unterschritten wird. Dann schließt die Elektronik wieder die Ventilanordnung und der Ablauf beginnt von neuem.

Weitere Merkmale und Vorteile der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:
- FIG. 1:: eine schnittbildliche Darstellung eines einen Sammelraum bildenden Behälters einer Druckgasanlage mit unten eingesetzter und angesetzter Vorrichtung nach der Erfindung,
- FIG. 2:: eine Darstellung entsprechend FIG. 1, jedoch in einer anderen Ausführung,
- FIG. 3:: eine Darstellung entsprechend FIG. 1 mit einem im Sammelraum befindlichen Füllstandsmesser, der eine eigene, eingebaute Elektronik aufweist,
- FIG. 4:: eine Darstellung entsprechend FIG. 1 mit einem separaten, nach unten offenen Hohlraum,
- FIG. 5:: eine Darstellung ähnlich FIG. 7 nunmehr mit vom Behälter des Sammelraums getragenem Hohlraum, ausgebildet durch eine Haube,

- FIG. 6:: eine Darstellung entsprechend FIG. 1 jedoch ohne Ventilanordnung und nur für einen Füllstandsmesser, an den eine Ventilanordnung unten angebracht werden kann,
- FIG. 7:: eine Darstellung entsprechend FIG. 5 für eine andere Ausführung des Füllstandsmessers und
- FIG. 8:: eine Darstellung entsprechend FIG. 1 in einer Ausführung, bei der im Behälter des Sammelraums drei Auslässe vorgesehen sind, zwei für Füllstandsmesser und einer für das Ableiten von Kondensat.

Mit 20 ist ein Behälter gezeichnet, der zu einem hier nicht näher dargestellten, durch eine Box angedeuteten Druckgassystem 22 gehört, der Behälter 20 bildet einen Sammelraum 24. Dieser hat an seiner tiefsten Stelle einen ersten Auslaß 26. In den Ausführungsbeispielen ist an der Außenseite des Behälters 20 am ersten Auslaß 26 ein Gewindeflansch 28 angeschweißt. Auf dieses Teil kommt es nicht an, entscheidend ist nur, dass am ersten Auslaß 26 in irgendeiner Form eine Ventilanordnung 30 dicht angesetzt werden kann.

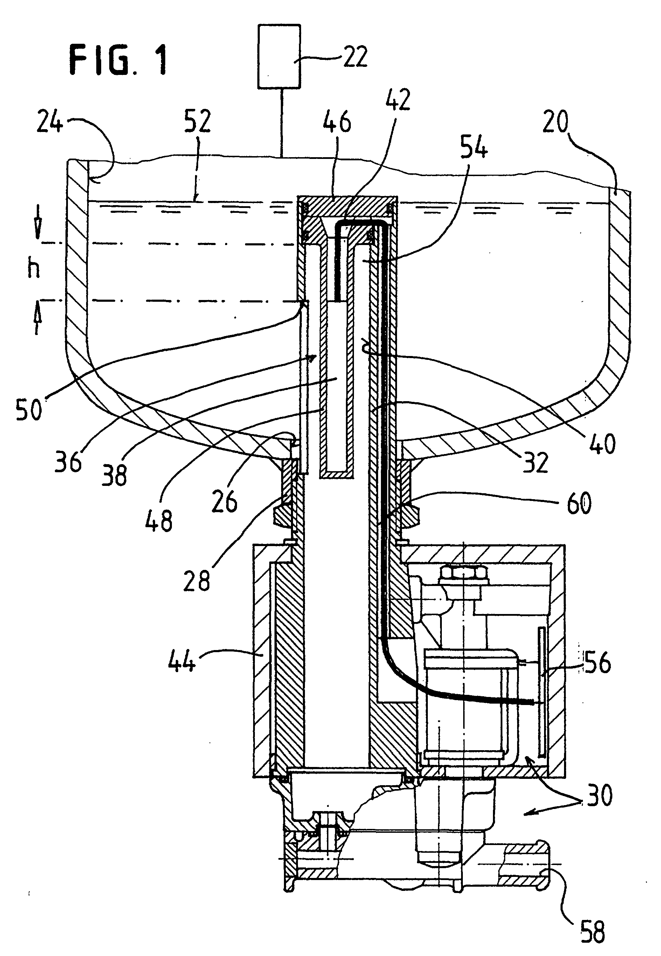

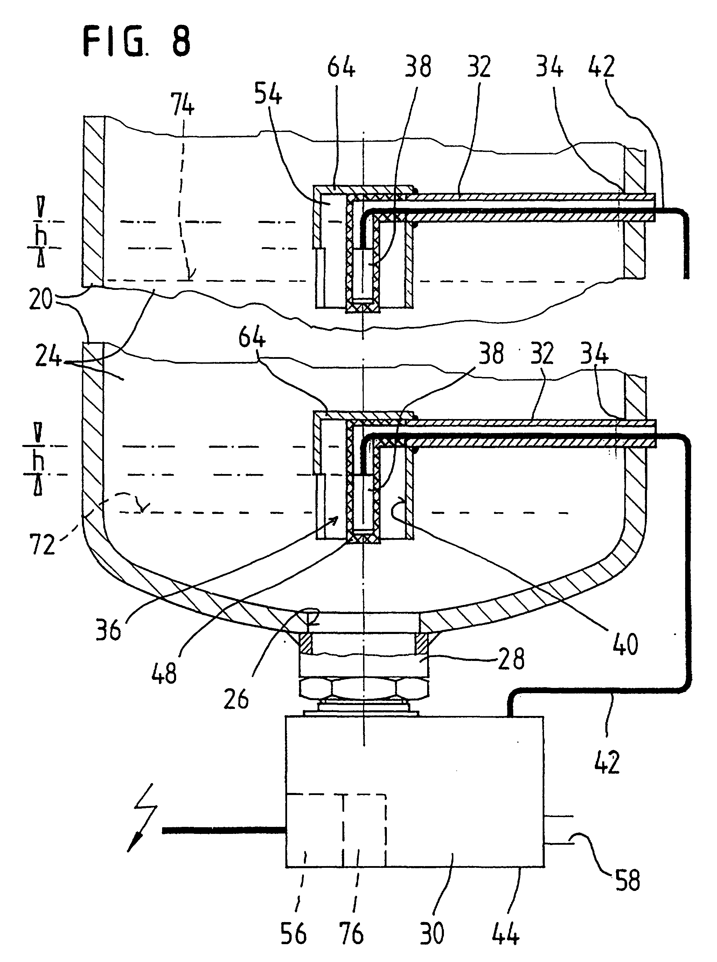

In den Sammelraum 24 ragt in den Ausführungsbeispielen nach den Figuren 1 bis 7 ein Rohrkörper 32, der in den Ausführungsbeispielen metallisch ist. Im Ausführungsbeispiel nach Figur 8 ragen zwei Rohrkörper 32 in den Sammelraum 24, für jeden ist jeweils ein zweiter Auslaß 34 des Behälters 20 vorgesehen. Der Rohrkörper 32 ist Teil eines Füllstandsmessers, auf den im folgenden näher eingegangen wird.

Im Ausführungsbeispiel nach Figur 1 befindet sich im Rohrkörper ein Sensor 36, der kapazitiv arbeitet. Er hat eine Innenelektrode 38 und eine Außenelektrode 40, letztere wird im Ausführungsbeispiel durch ein Teilstück des Rohrkörpers 32 gebildet. Die Anordnung von Innenelektrode 38 und Außenelektrode 40 ist weitestgehend zylindersymmetrisch. Vorzugsweise umgibt die Außenelektrode 40 die Innenelektrode 38 auf einen Winkel von 360 Grad und erstreckt sich nach oben und nach unten soweit oder ist dort abgeschlossen, so dass die Innenelektrode 38 im wesentlichen umhüllt wird. Dadurch befindet sich das elektrische Feld des Kondensators praktisch ausschließlich innerhalb der Außenelektrode 40. Es sind aber auch Außenelektroden 40 und/oder Innenelektroden 38 möglich, die sich über weniger als 360 Grad erstrecken. Mit der Innenelektrode 38 ist eine elektrische Zuleitung 42 verbunden, sie ist an das obere Ende der eigentlichen Innenelektrode 38 angeschlossen, geht von dort nach oben, verläuft dann ein kurzes Stück in der Waagerechten, danach verläuft sie durch den Rohrkörper 32 hindurch nach unten in ein Gehäuse 44, auf das später noch eingegangen wird.

Der Rohrkörper ist oben luftdicht durch eine Platte 46 abgeschlossen, die vorzugsweise aus Kunststoff oder einem anderen isolierenden Material gefertigt ist. Die Innenelektrode befindet sich innerhalb eines länglichen Topfes 48, der nur nach oben, wo die elektrische Zuleitung 42 verläuft, offen ist. Bis auf einen Durchlaß für die elektrische Zuleitung 42 wird dieser Topf oben durch die Platte 46 verschlossen. Der Topf 48 ist ebenfalls aus einem isolierenden Material, beispielsweise Kunststoff oder Keramik, gefertigt.

Im Rohrkörper 32 ist ein Durchlaß 50 ausgebildet. Dadurch kann Kondensat aus dem Sammelraum 24 in den Innenraum des Rohrkörpers 32 und von dort zur Ventilanordnung 30 gelangen. Dieser Durchlaß 50 endet so weit unterhalb des oberen Endes des Rohrkörpers 32, dass auch bei beliebig hoch im Behälter 20 gestiegenem Spiegel 52 an Kondensat ein ständig luftgefüllter Hohlraum 54 im oberen Bereichs des Topfes 48 und der angrenzenden Innenwände des Rohrkörpers 32 verbleibt. In diesen Hohlraum 54 kann kein Kondensat gelangen, mithin kann sich dort auch keine Ablagerung irgendwelcher Partikel bilden, die im Kondensat mitgeführt werden, seien sie gelöst oder ungelöst im Kondensat vorhanden. Dadurch wird vermieden, dass sich vom Topf 48 zur Innenwand des Rohrkörpers 32 hin ein durchgehender Belag bilden kann. Der kapazitive Sensor 36 wird somit geschützt, der Hohlraum 54 wird daher auch als Schutzzone bezeichnet. Es kann sich kein Ablagerungsfilm bilden, der die Außenwand des Topfes 48 kontinuierlich mit der Innenwand des Rohrkörpers 32, also der Außenelektrode 40, verbindet.

Der beschriebene, nur nach unten offene Hohlraum 54 ist ein wesentliches Charakteristikum der vorliegenden Erfindung. Er ist bei allen Ausführungen des Füllstandsmessers gegeben. Die elektrische Zuleitung 42 ist stets so geführt, dass sie ausreichend oberhalb der Unterkante des Hohlraums verläuft. Der Abstand, den die elektrische Zuleitung 42 einschließlich eines isolierenden Mantels bzw. einer Umhüllung (z.B. durch den Topfrand in Figur 1 oder den Rohrkörper 32 in Figur 8) auf ihrem Weg von der Innenelektrode 38 und in ihrem weiteren Verlauf von der Unterkante des Hohlraums einhält, bestimmt im wesentlichen die Höhe h einen Bereichs zwischen den beiden Elektroden 38 und 40, der frei von einem Belag, den das Kondensat abscheiden könnte, bleibt.

In allen Ausführungsbeispielen ist der Topf 48, in dem sich die Innenelektrode 38 befindet, nur nach oben offen und auch nur oben befestigt, er ist an seiner Außenfläche unterhalb seiner Befestigung vollständig frei.

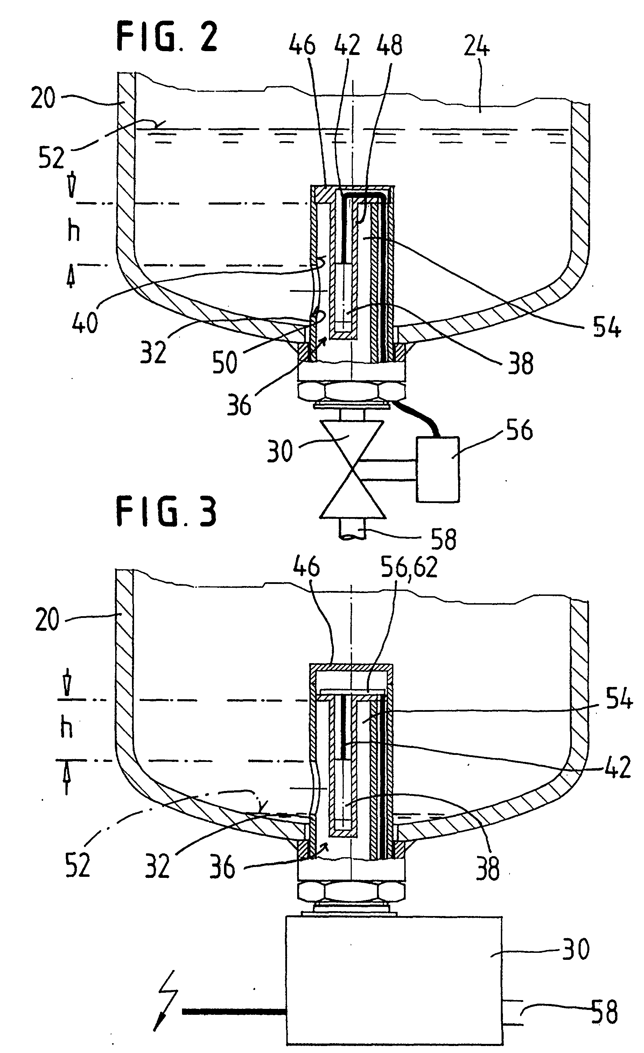

Im Ausführungsbeispiel nach Figur 1 ist der Rohrkörper 32 bis nach unten, unterhalb des ersten Auslasses 26, durchgezogen und dort mit einer an sich bekannten Ventilanordnung 30 verbunden. Auf sie muß hier nicht näher eingegangen werden, sie ist an sich bekannt. Verwendet werden kann eine Ventilanordnung, wie sie beispielsweise aus der eingangs genannten EP-Patentschrift bekannt ist. Es können aber auch Ventilanordnungen verwendet werden, die direkt gesteuert sind, hierauf wird unter Bezugnahme auf Figur 2 noch näher eingegangen werden. Die Ventilanordnung 30 befindet sich in dem Gehäuse 44, dort ist im Ausführungsbeispiel nach Figur 1 auch die komplette Elektronik 56 untergebracht, die mit der elektrischen Zuleitung 42 verbunden ist. Die Außenelektrode 40 wird über die elektrische Leitung in den metallischen Teilen, insbesondere Rohrkörper 32 usw. der Elektronik 56 zugeleitet, die Außenelektrode 40 liegt üblicherweise auf Null- bzw. Erdpotential.

58 ist der Kondensatauslaß. Das Ausführungsbeispiel nach Figur 1 der erfindungsgemäßen Vorrichtung hat zwar einen gewissen, allerdings sehr kleinen eigenen Sammelbehälter dadurch, dass der Rohrkörper 32 nach unten etwa um die gleiche Länge wie nach oben durchgezogen ist. Auf diesen Sammelbehälter kommt es aber nicht an, die erfindungsgemäße Vorrichtung arbeitet grundsätzlich auch ohne einen eigenen Sammelbehälter, dies wird im folgenden anhand von Figur 2 erläutert.

Das Ausführungsbeispiel nach Figur 2 ist ähnlich dem Ausführungsbeispiel nach Figur 1 ausgeführt, es wird im folgenden auf die Unterschiede eingegangen. Nach Figur 2 ist ein spezielles Formteil vorgesehen, das sowohl die Platte 46 als auch den Topf 48 ausbildet. Wie im Ausführungsbeispiel nach Figur 1 ist ein eigener Kanal 60 für die elektrische Zuleitung 42 vorgesehen, der abgedichtet ist vom sonstigen Innenraum des Rohrkörpers 32, also dem Bereich, wo Kondensat hingelangen kann.

Im Ausführungsbeispiel nach Figur 2 ist unmittelbar an den Gewindeflansch 28 ein Hauptventil, das hier die Ventilanordnung 30 bildet, angeflanscht. Es ist im Ausführungsbeispiel als Magnetventil ausgeführt und wird direkt von einer Elektronik 56 angesteuert. Diese ist mit der elektrischen Zuleitung 42 in Verbindung und hat Kontakt über die elektrisch leitenden Teile mit der Außenelektrode 40, die wiederum durch die Innenwandung des Rohrkörpers 32 auf einem Teil seiner Länge gebildet wird.

Ein wesentlicher Vorzug des Ausführungsbeispiels nach Figur 3 liegt darin, dass ein Teil der Elektronik sich im Füllstandsmesser befindet. Es handelt sich um einen Vorverstärker 62. Durch diesen Vorverstärker 62 spielen die Leitungskapazitäten, insbesondere die Kapazitäten der elektrischen Zuleitung 42 zur Masse hin, nur noch eine geringere Rolle. Verwendet wird beispielsweise ein Vorverstärker 62, wie er für Kondensatormikrophone an sich bekannt ist. Die Elektronik ist oberhalb des Topfes 48 in einem abgedichteten Raum im Rohrkörper 32 untergebracht. Dieser Raum befindet sich im konkreten Ausführungsbeispiel oberhalb der Schutzzone, deren Höhe h in allen Ausführungsbeispielen angegeben ist.

Die Ventilanordnung ist im Ausführungsbeispiel nach Figur 3 nicht näher dargestellt und erläutert. Unterhalb des Gewindeflansches 28 kann beispielsweise ein Hauptventil vorgesehen sein, das als Membranventil ausgeführt ist und durch ein elektromagnetisches Vorsteuerventil angesteuert wird. Die Auslegung ist dann entsprechend den Ventilanordnungen 30 nach dem Stand der Technik.

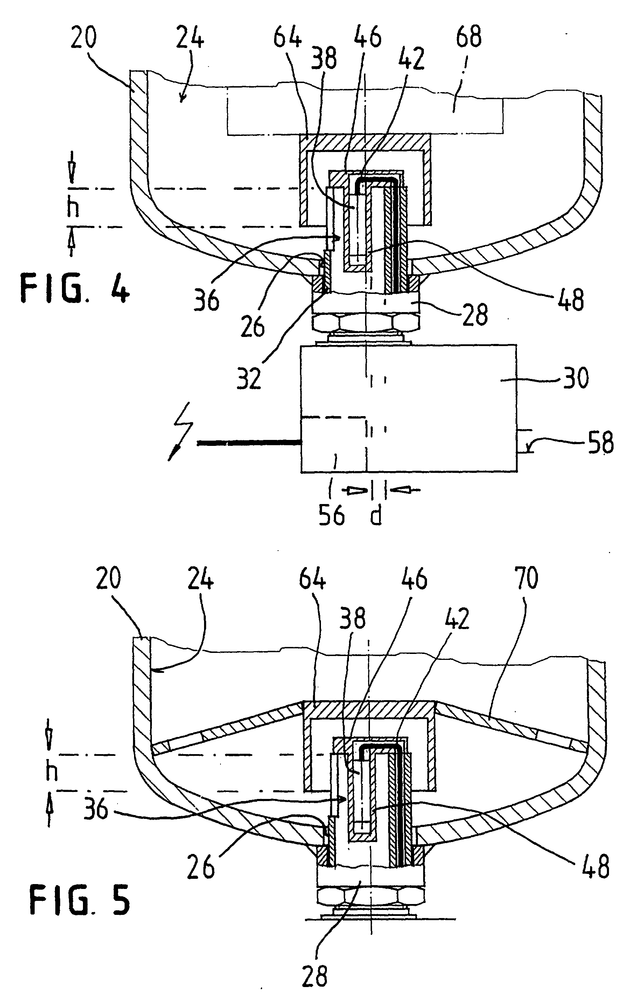

Im Ausführungsbeispiel nach Figur 4 wird nun nicht mehr, wie in den vorangegangenen Ausführungsbeispielen, der nach unten offene Innenhohlraum durch den Rohrkörper 32 gebildet, sondern es ist hierfür eine separate Haube 64 vorhanden, diese erfüllt die gleiche Funktion. Wie in Figur 4 eingezeichnet ist, besteht zwischen dem unteren Rand dieser Haube und der Unterkante der Umhüllung der elektrischen Zuleitung 42 ein ringförmiger Freiraum mit der Höhe h. Die Haube wird getragen durch ein Teil 68, das sich innerhalb des Behälters 20 befindet, beispielsweise ein Filterelement. Zwischen den Elektroden 38, 40 befindet sich ein nur von unten zugänglicher Ringraum, zu dem der Hohlraum 54 gehört. Der Abstand zwischen den Elektroden 38, 40 ist im wesentlichen die Summe aus der Materialdicke des Topfes 34 plus d. Letzteres ist der freie Abstand, also das radiale Maß des Ringraums. Dieses Maß d soll mindestens zwei, vorzugsweise mindestens drei und insbesondere mindestens vier Millimeter betragen. Dadurch wird eine restlose Entleerung des Ringraums von Kondensat möglich.

Im Ausführungsbeispiel nach Figur 5 ist die Haube 64 ebenso positioniert wie im Ausführungsbeispiel nach Figur 4, sie wird nun jedoch getragen durch seitliche Streben 70 oder Stützen, die entweder durch einen Kreisring ausgebildet sind, der entsprechende Durchlässe hat (wie dargestellt) oder sternförmig oder dergleichen ausgeführt sind.

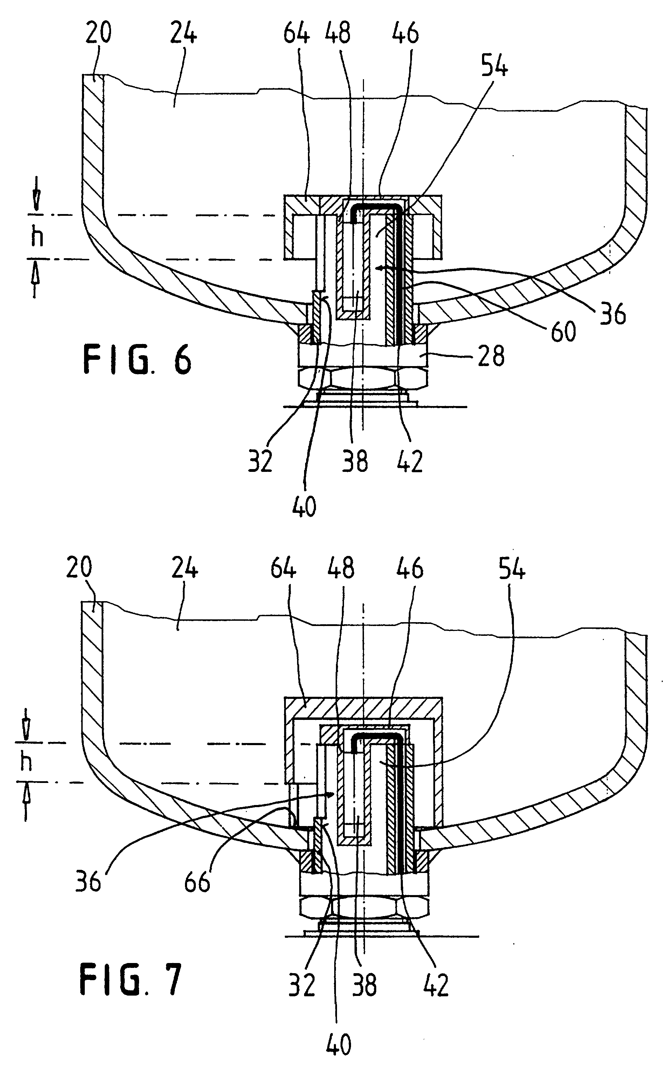

Im Ausführungsbeispiel nach Figur 6 ist wiederum ein Formteil aus Isoliermaterial vorgesehen, das Platte 46 und Topf 48 ausbildet. Es wird von einer Haube 46 dicht abschließend umgriffen, sie ist für die Ausbildung der Schutzzone der Höhe h zuständig. Der Durchlaß 50 im Rohrkörper 32 erstreckt sich nach oben bis zum Rand des Topfes 48, so dass der Rohrkörper 32 nun nicht zur Schutzzone beiträgt.

Wie auch im Ausführungsbeispiel nach Figur 5 ist die Ventilanordnung 30 nicht näher dargestellt, es kann eine Ventilanordnung nach einem der vorangegangenen Ausführungsbeispiele verwendet werden.

Das Ausführungsbeispiel nach Figur 7 unterscheidet sich dadurch vom Ausführungsbeispiel nach Figur 6, dass die Haube 64 bis nach unten durchgezogen ist und auf der Innenwand des Behälters 20 in Nähe des ersten Auslasses 26 und diesen umgreifend aufliegt und dort befestigt ist. Dies ermöglicht, dass zwischen Haube 64 und dem Formteil, das Platte 46 und Topf 48 ausbildet, ein Freiraum ausgebildet werden kann, der im Ausführungsbeispiel nach Figur 7 realisiert ist. Die Haube 64 hat in ihrem tiefsten Bereich eine Einlaßöffnung 66 für Kondensat.

Im Ausführungsbeispiel nach Figur 8 ragen zwei Rohrkörper 32, wie oben schon ausgeführt wurde, jeweils einer durch einen zweiten Auslaß 34. Der Rohrkörper 32 hat nun nicht mehr die Funktion, Kondensat abzuleiten, er hat ausschließlich die Funktion, den Füllstandsmesser zu tragen und die elektrische Zuleitung 42 geschützt herauszuführen. Im Ausführungsbeispiel nach Figur 8 ist der Topf 48, in dem sich die Innenelektrode 38, mit den im 90 Grad Winkel hierzu verlaufenden Rohrkörper 32 verbunden. Der Rohrkörper 32 ist vorzugsweise aus einem Metall hergestellt. Wenn der Rohrkörper aus einem Isoliermaterial gefertigt ist, ist die Zuleitung 42, die im Rohrkörper liegt, als Koaxialleitung ausgeführt, deren Mantel mit der Außenelektrode 40 elektrisch verbunden ist. Wiederum ist eine Haube 64 vorgesehen, die nach unten offen ist und durch die Schutzzone mit der Höhe h eingehalten wird.

In Figur 8 sind zwei baugleiche Füllstandsmesser übereinander angeordnet. Die Vorrichtungen nach den vorangegangenen Ausführungsbeispielen haben dagegen jeweils nur einen Füllstandsmesser. Dies entspricht dem unteren Füllstandsmesser der Ausführung nach Figur 8. Grundsätzlich können alle Ausführungsbeispiele entweder mit einem Füllstandsmesser für ein unteres Niveau 72, einem Füllstandsmesser für ein oberes Niveau 74 oder mit zwei Füllstandsmessern, wie in Figur 8 dargestellt, ausgerüstet werden.

Ist nur ein Füllstandsmesser für das obere Niveau 74 vorgesehen, kann er baugleich mit den Füllstandsmessern aus den Ausführungsbeispielen sein. Bei zwei Füllstandsmessern können diese axial übereinander oder seitlich versetzt angeordnet sein. Bei axialer Anordnung übereinander können sie im gleichen Rohrkörper untergebracht sein. Vorteilhafterweise sind in einem relativ lang ausgebildeten Topf 48 zwei unterschiedliche Innenelektroden 38 im Abstand voneinander übereinander angeordnet. Es können aber auch zwei völlig separate Anordnungen verwendet werden, die dann jeweils einen eigenen Hohlraum 54 aufweisen.

Am ersten Auslaß 26, der mit einem Gewindeflansch 28 versehen ist, ist die Ventilanordnung 30 vorgesehen. Sie ist ähnlich ausgebildet wie im Ausführungsbeispiel nach Figur 3, dies stellt aber keine Einschränkung dar. Grundsätzlich kann jede beliebige Ventilanordnung 30, wie auch in allen anderen Ausführungsbeispielen, am ersten Auslaß 26 vorgesehen sein.

Verfahrensmäßig arbeiten die Vorrichtungen mit nur einem, für ein unteres Niveau 72 des Flüssigkeitsspiegels 52 vorgesehenen Füllstandsmesser wie folgt: Nach Abschluß des letzten Entleerungsvorgangs, also Öffnen und Schließen der Ventilanordnung 30, befindet sich der Flüssigkeitsspiegel 52 unter dem unteren Niveau 72. Steigt der Flüssigkeitsspiegel und erreicht das untere Niveau 72, wird in der Elektronik 56 ein Zeittor bzw. eine Zeituhr 76 gestartet. Während das Zeittor läuft, sammelt sich Kondensat an und der Flüssigkeitsspiegel 52 steigt ausgehend vom unteren Niveau 72 an. Ist das Zeittor abgelaufen, wird die Ventilanordnung 30 wieder geöffnet. Sie bleibt solange geöffnet, bis der Flüssigkeitsspiegel wieder unter das untere Niveau 72 abgesunken ist. Dann laufen die Vorgänge wie beschrieben erneut wieder ab.

Bei einem zusätzlichen Füllstandsmesser für das obere Niveau 74 beginnt ein Ableitvorgang, also Öffnen der Ventilanordnung 30, wenn das obere Niveau 74 erreicht ist und endet, wenn das untere Niveau 72 erreicht ist. Ein Zeittor ist dann nicht notwendig. Ein Öffnen der Ventilanordnung 30 wird nach einem Ableitvorgang erst wieder dann ausgelöst, wenn das obere Niveau 74 wieder erreicht ist.

Ist nur ein Füllstandsmesser für das obere Niveau 74 vorgesehen, so beginnt ein Ableitvorgang, also Öffnen der Ventilanordnung 30, wenn dieses obere Niveau 74 erreicht ist. Die Ventilanordnung 30 wird für eine vorgegebene Zeitspanne aufgehalten, es wird also ein Zeittor 76 gestartet. Ist dieses abgelaufen, wird die Ventilanordnung 30 wieder geschlossen. Es kann sich dann wieder Kondensat ansammeln, bis das obere Niveau 74 erreicht ist und erneut ein Ableitvorgang erfolgt. In der bevorzugten Ausführung hat die erfindungsgemäße Vorrichtung lediglich einen Füllstandsmesser für das untere Niveau, wie in den Figuren 1 bis 7 dargestellt ist.

## Patentansprüche

1. Anordnung zum Ableiten von Kondensat aus Druckgassystemen (22), insbesondere Druckluftsystemen, welche die folgenden Merkmale aufweist:
- einen zum Druckgassystem (22) gehörenden Sammelraum (24) für Kondensat, in dem sich bei Betrieb des Druckgassystems (22) Kondensat ansammelt und der mindestens einen Auslaß (26, 34) hat,
- eine Vorrichtung zum Ableiten von Kondensat aus diesem Sammelraum (24), welche ihrerseits einen Füllstandsmesser aufweist,
- der einen Rohrkörper (32) aufweist, der dem Auslaß entsprechend bemessen ist, für eine dichte Befestigung im Auslaß (26, 34) vorgerichtet ist und sich im montierten Zustand innerhalb des Sammelraums (24) befindet,
- der einen kapazitiven Sensor (36) aufweist, a) der vom Rohrkörper (32) getragen ist und b) der mit einer Elektronik (56, 62) verbunden, die sich entweder außerhalb des Sammelraums (24) oder von der sich zumindest ein Teil (Vorverstärker 62) innerhalb des Sammelraumes (24) und getragen vom Rohrkörper (32) befindet und zur Steuerung einer externen Ventilanordnung (30) vorgesehen ist, wobei der kapazitive Sensor (36) eine Innenelektrode (38) und eine Außenelektrode (40) hat, die nur oberhalb eines nach oben luftdicht abgeschlossenen, nach unten offenen Hohlraums (54) mechanisch miteinander verbunden sind.

2. Anordnung gemäß Anspruch 1, **dadurch gekennzeichnet, daß** die Vorrichtung zum Ableiten von Kondensat einen Sammelbehälter für Kondensat aufweist, der im Vergleich zum Sammelraum (24) sehr klein ist.

3. Anordnung nach Anspruch 1, **dadurch gekennzeichnet, dass** eine Elektrode des kapazitiven Sensors (36) an eine Zuleitung (42) angeschlossen ist und dass diese Zuleitung (42) mindestens in der Höhe h oberhalb eines unteren Randes des Hohlraums (54) verläuft.

4. Anordnung nach Anspruch 3, **dadurch gekennzeichnet, dass** die eine Elektrode (38) aus dem Hohlraum (54) nach unten vorragt.

5. Anordnung nach Anspruch 1, **dadurch gekennzeichnet, dass** der kapazitive Sensor (36) zwei Elektroden (38, 40) aufweist, die zumindest mit einem Teil der Elektronik (56), der innerhalb des Sammelraums (24) und am Rohrkörper (32) befestigt ist, verbunden ist, und dass eine im Rohrkörper (32) verlaufende elektrische Zuleitung (42) an diese Elektronik (56) angeschlossen ist.

6. Anordnung nach Anspruch 1, **dadurch gekennzeichnet, dass** sich die Elektronik (56) außerhalb des Sammelraums (24) befindet und dass mindestens eine Elektrode des kapazitiven Sensors (36) über eine elektrische Zuleitung (42), die durch den Rohrkörper (32) verläuft, mit der Elektronik (56) verbunden ist.

7. Anordnung nach Anspruch 1, **dadurch gekennzeichnet, dass** der Rohrkörper (32) in seinem außerhalb des Sammelraums (24) befindlichen Bereich mit einer Ventilanordnung (30), insbesondere einem Gehäuse (44) einer Ventilanordnung (30) verbunden ist.

8. Anordnung nach Anspruch 1, **dadurch gekennzeichnet, dass** der Sammelraum (24) zwei Auslasse (26, 34) hat, dass an einem Auslaß (26) die Ventilanordnung (30) angeschlossen ist und dass am anderen Auslaß (34) der Rohrkörper (32) vorgesehen ist.

9. Anordnung nach Anspruch 1 oder 3, **dadurch gekennzeichnet, dass** die Elektroden des kapazitiven Sensors (36) in ihrem oberen Bereich innerhalb eines nach oben luftdicht abgeschlossenen, nach unten offenen Hohlraums (54) angeordnet sind und insbesondere dort einen Abstand voneinander haben, der mindestens 2 mm, vorzugsweise mindestens 3 mm, insbesondere mindestens 4 mm, gemessen parallel zum Flüssigkeitsspiegel (52) des Kondensats, beträgt.

10. Anordnung gemäß Anspruch 1, **dadurch gekennzeichnet, daß** die Elektronik (56) eine Zeitschaltung (76) umfaßt.

11. Anordnung gemäß Anspruch 1, **dadurch gekennzeichnet, daß** die Vorrichtung nur einen Füllstandsmesser für ein unteres Niveau aufweist.

12. Verfahren zum Betreiben der Anordnung nach den Ansprüchen 10 und 11, **dadurch gekennzeichnet, dass** nur ein Füllstandsmesser für ein unteres Niveau (72) vorgesehen ist, dass in der Elektronik (56) eine Zeitschaltung (76) vorgesehen ist und dass nach Schließen der Ventilanordnung (30), wobei der Flüssigkeitsspiegel (52) des Kondensats auf das untere Niveau (72) angestiegen ist, die Zeitschaltung (76) ausgelöst wird und nach deren Ablauf die Ventilanordnung (30) durch die Elektronik (56) solange geöffnet wird, bis das untere Niveau (72) wieder unterschritten ist und die Elektronik (56) die Ventilanordnung (30) wieder schließt.

## Claims

1. Arrangement for discharging condensate out of pressure gas systems (22), particularly of compressed air systems, having the following characteristics:
- a receptacle (24) for condensate belonging to the pressure gas system (22) in which condensate is accumulating during the operation of the pressure gas system (22) and which has at least one outlet (26, 34),
- a device for discharging condensate out of said receptacle (24), said device having a level gauger,
- provided with a pipe element (32) whose size corresponds to the outlet, which is prepared for tight fastening in the outlet (26, 34) and which is located, once mounted, inside the receptacle (24),
- provided with a capacitive sensor (36), a) borne by the pipe element (32) and b) connected to an electronic (56, 62) located either outside the receptacle (24) or, part of it at least (preamplifier 62), inside the receptacle (24) and carried by the pipe element (32) said electronic being intended to actuate an external valve arrangement (30), whereby the capacitive sensor (36) has an inner electrode (38) and an outer electrode (40), these two electrodes being only connected mechanically above a hollow space (54) that is airtight to the top and open to the bottom.

2. Arrangement according to claim 1, **characterized in that** the device for discharging condensate has a recipient for condensate, which is very small compared with the receptacle (24) of its own.

3. Arrangement according to claim 1, **characterized in that** an electrode of the capacitive sensor (36) is connected to a feed line (42) and that this feed line (42) is running at least at the height h above the lower edge of the hollow space (54).

4. Arrangement according to claim 3, **characterized in that** the one electrode (38) is projecting downward out of the hollow space (54).

5. Arrangement according to claim 1, **characterized in that** the capacitive sensor (36) is provided with two electrodes (38, 40), which are connected with at least part of the electronic (56) inside the receptacle (24) and fastened on the pipe element (32) and that an electric feed line (42) running in the pipe element (32) is connected to this electronic (56).

6. Arrangement according to claim 1, **characterized in that** the electronic (56) is located outside the receptacle (24) and that at least one electrode of the capacitive sensor (36) is connected with the electronic (56) via an electric feed line (42) running through the pipe element (32).

7. Arrangement according to claim 1, **characterized in that** the pipe element (32) is connected, in its area located outside the receptacle (24), with a valve arrangement (30), particularly with a casing (44) of a valve arrangement (30).

8. Arrangement according to claim 1, **characterized in that** the receptacle (24) has two outlets (26, 34), that the valve arrangement (30) is connected to one of the outlets (26) and that the pipe element (32) is provided on the other outlet (34).

9. Arrangement according to claim 1 or 3, **characterized in that** the electrodes of the capacitive sensor (36) are arranged, in their upper area, inside a hollow space (54) that is airtight to the top and open to the bottom and that they are spaced, particularly there, by at least 2 mm, preferably by 3 mm, particularly at least by 4 mm, said spacing being measured in parallel to the liquid level (52) of the condensate.

10. Arrangement according to claim 1, **characterized in that** the electronic (56) has a timer (76).

11. Arrangement according to claim 1, **characterized in that** the device is only provided with one level gauger for a lower level.

12. Method for operating the arrangement according to the claims 10 and 11, **characterized in that** only one level gauger for a lower level (72) is provided, that a timer (76) is provided in the electronic (56) and that, once the valve arrangement (30) is closed, the liquid level (52) of the condensate having reached the lower level (72), the timer (76) is triggered and that, once the timer has run down, the valve arrangement (30) is kept open by the electronic (56) until the liquid level has sunk underneath the lower level (72) and the electronic (56) is closing the valve arrangement (30).

## Revendications

1. Disposition destinée à évacuer le condensat de systèmes à gaz comprimé (22), en particulier de systèmes à air comprimé, qui présente les caractéristiques suivantes:
- une chambre collectrice (24) pour le condensat, qui fait partie du système à gaz comprimé (22), dans laquelle s'accumule le condensat lorsque le système à gaz comprimé (22) est en service et qui présente une sortie (26, 34) du moins,
- un dispositif destiné à évacuer le condensat de cette chambre collectrice (24), ledit dispositif présentant de son côté un mesureur de niveau
- lequel présente un corps tubulaire (32) qui est dimensionné conformément à la sortie, qui est préparé pour une fixation étanche dans la sortie (26, 34) et qui, en état monté, se trouve à l'intérieur de la chambre collectrice (24),
- lequel présente un capteur capacitif (36), a) qui est porté par le corps tubulaire (32) et b) qui est relié à une électronique (56, 62) qui soit se trouve à l'extérieur de la chambre collectrice (24) soit une partie au moins (le préamplificateur 62) de laquelle se trouve à l'intérieur de la chambre collectrice (24) et est portée par le corps tubulaire (32), ladite électronique étant prévue pour la commande d'une disposition externe de soupapes (30), le capteur capacitif (36) présentant une électrode intérieure (38) et une électrode extérieure (40) qui ne sont reliées mécaniquement l'une à l'autre qu'au-dessus d'un espace vide (54) fermé hermétiquement vers le haut et ouvert vers le bas.

2. Disposition selon la revendication 1, **caractérisée par le fait que** le dispositif destiné à évacuer le condensat présente un réservoir collecteur pour le condensat, qui, comparé à la chambre collectrice (24), est très petit.

3. Disposition selon la revendication 1, **caractérisée par le fait qu'**une électrode du capteur capacitif (36) est connectée à une ligne d'amenée (42) et que cette ligne d'amenée (42) s'étend au moins à la hauteur h au-dessus d'un bord inférieur de l'espace vide (54).

4. Disposition selon la revendication 3, **caractérisée par le fait que** l'une (38) des électrodes fait saillie vers le bas de l'espace vide (54).

5. Disposition selon la revendication 1, **caractérisée par le fait que** le capteur capacitif (36) présente deux électrodes (38, 40) qui sont reliées à au moins une partie de l'électronique (56), qui est fixée à l'intérieur de la chambre collectrice (24) et sur le corps tubulaire (32), et qu'une ligne électrique d'amenée (42) s'étendant dans le corps tubulaire (32) est connectée à cette électronique (56).

6. Disposition selon la revendication 1, **caractérisée par le fait que** l'électronique (56) se trouve à l'extérieur de la chambre collectrice (24) et que du moins une électrode du capteur capacitif (36) est reliée à l'électronique (56) par une ligne électrique d'amenée (42) qui s'étend à travers le corps tubulaire (32).

7. Disposition selon la revendication 1, **caractérisée par le fait que**, dans sa zone située à l'extérieur de la chambre collectrice (24), le corps tubulaire (32) est relié à une disposition de soupapes (30), en particulier à un boîtier (44) d'une disposition de soupapes (30).

8. Disposition selon la revendication 1, **caractérisée par le fait que** la chambre collectrice (24) présente deux sorties (26, 34), que ladite disposition de soupapes (30) est connectée à l'une (26) des sorties et que le corps tubulaire (32) est prévu à l'autre sortie (34).

9. Disposition selon la revendication 1 ou 3, **caractérisée par le fait que**, dans leur zone supérieure, les électrodes du capteur capacitif (36) sont disposées à l'intérieur d'un espace vide (54) fermé hermétiquement vers le haut et ouvert vers le bas, et qu'elles présentent en particulier là une distance l'une de l'autre qui est de 2 mm du moins, de préférence de 3 mm du moins, en particulier de 4 mm du moins, mesurée parallèlement au niveau de liquide (52) du condensat.

10. Disposition selon la revendication 1, **caractérisée par le fait que** l'électronique (56) comprend une minuterie (76).

11. Disposition selon la revendication 1, **caractérisée par le fait que** le dispositif présente seulement un mesureur de niveau pour un niveau inférieur.

12. Procédé destiné à faire fonctionner la disposition selon les revendications 10 et 11, **caractérisé par le fait que** l'on prévoit seulement un mesureur de niveau pour un niveau inférieur (72), qu'une minuterie (76) est prévue dans l'électronique (56) et que, après avoir fermé la disposition de soupapes (30), le niveau de liquide (52) du condensat ayant atteint le niveau inférieur (72), ladite minuterie (76) est déclenchée et que, après l'arrêt de celle-ci, la disposition de soupapes (30) est ouverte par l'électronique (56) jusqu'à tant que le niveau de liquide soit de nouveau inférieur au niveau inférieur (72) et que l'électronique (56) referme la disposition de soupapes (30).
